# EUROPÄISCHE PATENTSCHRIFT

(11) **EP 3 207 548 B1**
(45) Veröffentlichungstag und Bekanntmachung des Hinweises auf die Patenterteilung: **02.09.2020**
(21) Anmeldenummer: 15797325.6
(22) Anmeldetag: 19.11.2015
(51) Int. Cl.: H01B 9/06, H02G 5/06

(54) **ANORDNUNG AUFWEISEND EINEN FLUIDISOLIERTEN PHASENLEITER**
ARRANGEMENT COMPRISING A FLUID-INSULATED PHASE CONDUCTOR
DISPOSITIF AVEC CONDUCTEUR DE PHASE ISOLÉ FLUIDIQUEMENT

(30) Priorität: 16.12.2014 DE 102014226016
(43) Veröffentlichungstag der Anmeldung: 23.08.2017
(73) Patentinhaber: Siemens Aktiengesellschaft, 80333 München (DE)
(72) Erfinder: KUSCHEL, Mark, 13156 Berlin (DE); PRESSER, Nazmir, 14052 Berlin (DE)
(86) Internationale Anmeldenummer: PCT/EP2015/077049
(87) Internationale Veröffentlichungsnummer: WO 2016/096314

(56) Entgegenhaltungen:
- EP-A1- 0 980 078
- WO-A1-2010/142518
- DE-A1- 2 649 398
- DE-U- 7 345 360
- GB-A- 481 408

## Beschreibung

Die Erfindung bezieht sich auf eine Anordnung aufweisend einen fluidisolierten Phasenleiter, welcher von einem elektrisch isolierenden Fluid umspült angeordnet ist, wobei der Phasenleiter zumindest abschnittsweise in mehrere Leiterbahnen unterteilt ist.

Ein fluidisolierter Phasenleiter ist beispielsweise aus der Offenlegungsschrift FR 2217840 bekannt. Der dortige fluidisolierte Phasenleiter ist vorgesehen, innerhalb eines metallischen Gehäuses angeordnet zu werden, wobei das Gehäuse mit einem elektrisch isolierenden Gas befüllt ist. Zum Ausgleich von Längenänderungen des Phasenleiters ist der Phasenleiter abschnittsweise in mehrere parallel verlaufende Leiterbahnen unterteilt. Die Leiterbahnen sind dabei zur Erzielung einer guten Bewegbarkeit bei geringer mechanischer Beanspruchung schraubenförmig gewunden geführt. Je nach Relativbewegungen im dortigen Phasenleiter kommt es zu einer Verformung der schraubenförmigen Leiterbahnen.

Zur Stabilisierung des Phasenleiters ist eine zentrale Führungsstange vorgesehen, welche eine teleskopartige axiale Längenänderung des Phasenleiters stabilisiert. Zusätzlich sind die schraubenförmigen Leiterbahnen von einer Haube umgriffen. So ergibt sich eine kraftarm zu betätigende Anordnung, um Längenänderungen in einem Phasenleiter auszugleichen. Die bekannte Konstruktion ist jedoch als mechanisch aufwändig und damit kostenintensiv einzuschätzen.

Aus der Europäischen Patentanmeldung EP 0 980 078 A1 geht ein gasisoliertes Kabel hervor, welches zum Einhausen eines Gases eine entfaltbare Hülle aufweist. Der internationalen Veröffentlichung WO 2010/142518 A1 ist eine Stromleiteranordnung entnehmbar, dessen Stromleiterbahn in mehrere Segmentleiter unterteilt ist, wobei die Segmentleiter miteinander elektrisch leitend kontaktiert sind. Die Segmentleiter begrenzen in ihrem Inneren einen dielektrisch geschirmten Zentralkanal. Aus dem Patent GB 481 408 ist ein elektrisches Kabel bekannt, welches eine Isolation aus permeablem Material aufweist, welches mit einem Öl getränkt ist.

So liegt der Erfindung die Aufgabe zugrunde, einen fluidisolierten Phasenleiter anzugeben, welcher bei vereinfachtem Aufbau Formänderungen ausgleichen kann.

Erfindungsgemäß wird die Aufgabe bei einem fluidisolierten Phasenleiter der eingangs genannten Art dadurch gelöst, dass die Leiterbahnen einander über Stützflächen stützen, welche durch ein elektrisch isolierendes Mittel vor unmittelbarer Berührung voneinander geschützt sind, und der Phasenleiter innerhalb eines Kapselungsgehäuses angeordnet ist, wobei das Kapselungsgehäuse ein Druckbehälter ist.

Ein Phasenleiter dient der Führung eines elektrischen Stromes, wobei der Phasenleiter elektrisch zu isolieren ist, um Erdschlüsse bzw. Kurzschlüsse zu verhindern. Die Nutzung eines elektrisch isolierenden Fluids zur elektrischen Isolation eines Phasenleiters weist den Vorteil auf, dass eine selbsttätige Regeneration von Störungen durch ein Verwirbeln des Fluids herbeigeführt werden kann. So können beispielsweise Durchschlagskanäle nahezu selbsttätig durch das Fluid geschlossen werden. Das elektrisch isolierende Fluid sollte vorzugsweise innerhalb eines Kapselungsgehäuses eingeschlossen sein, wobei der fluidisolierte Phasenleiter zumindest abschnittsweise innerhalb des Kapselungsgehäuses angeordnet ist. Somit besteht die Möglichkeit, dass der Phasenleiter von dem elektrisch isolierenden Fluid umspült, gegebenenfalls durchspült ist. Somit kann neben einer elektrisch isolierenden Wirkung des elektrisch isolierenden Fluids dieses auch zur Kühlung des fluidisolierten Phasenleiters eingesetzt werden. Das elektrisch isolierende Fluid kann eine elektrisch isolierende Strecke zwischen Phasenleiter und Kapselungsgehäuse ausbilden. So ist es beispielsweise möglich, das Kapselungsgehäuse mit einem vom elektrischen Potential des Phasenleiters abweichenden Potential auszustatten. Das Kapselungsgehäuse sollte vorzugsweise hermetisch geschlossen ausgeführt sein, so dass das elektrisch isolierende Fluid aus dem Kapselungsgehäuse nicht entweichen bzw. durch andere Medien nicht verunreinigt werden kann. Durch die Nutzung eines fluiden Isoliermediums kann zumindest abschnittsweise auf eine Feststoffisolation am Phasenleiter verzichtet werden. Es kann vorgesehen sein, dass innerhalb eines Kapselungsgehäuses jeweils nur Phasenleiter angeordnet sind, welche dasselbe elektrische Potential führen sollen. Diese(r) Phasenleiter ist/sind von einem separaten Fluidvolumen umspült. Weitere Phasenleiter, welche zur Führung eines abweichenden elektrischen Potentials vorgesehen sind, sind von jeweils voneinander separierten Fluidvolumina umspült in separaten Kapselungsgehäusen angeordnet. Eine derartige Ausgestaltung wird als einphasig gekapselte Anordnung bezeichnet.

Weiter kann vorgesehen sein, dass innerhalb eines Kapselungsgehäuses mehrere Phasenleiter von ein und demselben Fluidvolumen umspült und gegeneinander elektrisch isoliert sind. In diesem Falle wird von einer mehrphasig gekapselten Anordnung gesprochen. Die Phasenleiter können voneinander abweichende elektrische Potentiale führen. Zur Übertragung eines 3-phasigen Spannungssystems können Phasenleiter, welche zur Führung dreier verschiedener elektrischer Potentiale vorgesehen sind, durch dasselbe Fluidvolumen gegeneinander elektrisch isoliert innerhalb eines gemeinsamen Kapselungsgehäuses angeordnet sein.

Unter einem Kapselungsgehäuse wird eine Barriere verstanden, welche ein Fluid umschließt.

Eine Unterteilung des Phasenleiters in mehrere parallel verlaufende Leiterbahnen weist zum einen den Vorteil auf, dass Wärme verbessert aus den einzelnen Leiterbahnen nach außen abgegeben werden kann. Zum anderen ergibt sich eine vorteilhafte Aufteilung eines durch den Phasenleiter zu führenden Stromes in mehrere Teilströme. Jede der Leiterbahnen kann so einen Teil eines gesamten, durch den Phasenleiter zu führenden Stromes tragen. Stromverdrängungseffekte, z. B. wärmebedingt oder frequenzbedingt, können in jedem der einzelnen Teilleiter auftreten, so dass gegenüber einem einstückigen Phasenleiter eine effizientere Nutzung des Leitermaterials erfolgen kann. Somit kann die Strombelastbarkeit eines mehrere Leiterbahnen aufweisenden Phasenleiters höher sein als die eines einstückig ausgeführten querschnittsgleichen Phasenleiters.

Durch ein gegenseitiges Stützen der einzelnen Leiterbahnen kann ein biegesteifer Verband von Leiterbahnen ausgebildet werden, so dass trotz Unterteilung in mehrere Leiterbahnen eine gegenseitige Stützung der Leiterbahnen erfolgt. Vorteilhaft können die Leiterbahnen einander reibschlüssig stützen. Somit können zwischen Leiterbahnen beispielsweise Reibkräfte auftreten. Beispielsweise können insbesondere bei einem Ausbiegen des Phasenleiters die Leiterbahnen reibschlüssig aneinander liegen, so dass Relativbewegungen zwischen den Leiterbahnen auftreten können, diese jedoch Reibkräfte zwischen Anlagenflächen der Leiterbahnen überwinden müssen. Neben einem Verformen der Leiterbahnen des Phasenleiters aufgrund von äußeren Kräften kann eine Verformung auch durch Wärmeeffekte bedingt auftreten. Dabei ermöglichen die Leiterbahnen trotz einer biegesteifen Ausführung des Phasenleiters ein begrenztes Verformen bzw. Relativbewegungen der Leiterbahnen zueinander. Dabei bleibt ihre Stützfunktion gegeneinander erhalten, wodurch bei Relativbewegungen Reibkräfte zu überwinden sind. Aufgrund der zu überwindenden Reibkräfte ist ein winkelsteifer Verbundkörper gegeben, welcher den Phasenleiter bildet. Benachbarte Stützflächen der Leiterbahnen können formkomplementär ausgeführt sein. Bevorzugt können benachbarte Stützflächen im Wesentlichen deckungsgleich ausgeformt sein. So kann eine flächige Anlage von Leiterbahnen über Stützflächen erfolgen. Gegebenenfalls können Stützflächen unter Zwischenlage einer weiteren Baugruppe mittelbar aneinander anliegen. Eine Unterteilung des Phasenleiters ermöglicht weiterhin, ein elektrisch isolierendes Fluid auch in Fügespalte zwischen den Phasenleitern eindringen zu lassen. Hierdurch kann eine verbesserte Abführung von Wärme aus dem Innern des Phasenleiters erzielt werden.

Eine weitere vorteilhafte Ausgestaltung kann vorsehen, dass die Leiterbahnen auf einem in sich geschlossenen Umlauf einander stützen.

Durch die elektrisch parallel verlaufenden Leiterbahnen ergibt sich innerhalb des Phasenleiters ein Strombahnverlauf, zu welchem ein Umlauf im Wesentlichen quer ausgerichtet ist. Der Strombahnverlauf entspricht einer Haupterstreckungsachse, entlang welcher sich der Phasenleiter erstreckt. Diese Haupterstreckungsachse kann linear, gekrümmt usw. verlaufen. Der Umlauf ist dabei bevorzugt in sich geschlossen ausgeführt, so dass die Leiterbahnen in Richtung des Umlaufes endlos aufeinander abfolgen. Stabilisierungskräfte zum Stabilisieren der Leiterbahnen gegeneinander können in radialen Richtungen auf die Leiterbahnen wirken, wobei die Leiterbahnen mittelbar oder unmittelbar, beispielsweise mit Stützflächen, gegeneinander stoßen und so einander gegenseitig stützen. Durch eine Formgebung (Querschnitt) der Leiterbahnen können radiale Kräfte z. B. in Querkräfte umlenkt werden, so dass eine Anpresskraft der Leiterbahnen gegeneinander und damit eine Abstützung derselben verstärkt wird. Zur Unterstützung eines Verbundes der Leiterbahnen können von außen radial wirkende Kräfte auf den Phasenleiter aufgebracht werden. Dies kann insbesondere die Reibkräfte zwischen den Leiterbahnen (insbesondere über die Stützflächen) zumindest abschnittsweise erhöhen.

Eine weiter vorteilhafte Ausgestaltung kann vorsehen, dass zumindest eine der Leiterbahnen mehrdrähtig ausgeführt ist.

Eine mehrdrähtige Ausführung einer Leiterbahn ermöglicht es, die Leiterbahn selbst mit einer erhöhten Elastizität bzw. Flexibilität auszustatten. Bevorzugt sollten die Leiterbahnen gleichartig ausgeformt sein, so dass beispielsweise sämtliche Leiterbahnen mehrdrähtig ausgeführt sein. Dadurch wird der zur Stromleitung vorgesehene Querschnitt innerhalb einer Leiterbahn auf mehrere Einzelquerschnitte von Drähten aufgeteilt, wobei die einzelnen Drähte einander berühren und miteinander elektrisch kontaktiert sind. Durch die mehrdrähtige Ausführung kann der Phasenleiter vereinfacht umgeformt werden sowie in verbesserter Weise auf Längenänderung, beispielsweise bedingt durch Wärmeeinwirkungen, reagieren.

Eine weitere vorteilhafte Ausgestaltung kann vorsehen, dass die Leiterbahnen jeweils ein Segment des Phasenleiters bilden.

Vorteilhafterweise sollte der Phasenleiter mehrere Leiterbahnen aufweisen, die jeweils ein Segment des Phasenleiters bilden. Dabei können die Querschnitte der Leiterbahnen annähernd gleich ausgeformt sein. Beispielsweise kann eine Leiterbahn einen im Wesentlichen trapezförmigen oder triangularen Querschnitt aufweisen, wobei die Leiterbahn eine im Wesentlichen prismatische Struktur aufweisen kann. Über Mantelflächen der Segmente der Leiterbahnen können die Leiterbahnen einander gegenseitig stützen. Eine Mantelfläche kann zumindest abschnittsweise als Stützfläche dienen.

Vorteilhafterweise kann weiter vorgesehen sein, dass die Leiterbahnen eine im Wesentlichen kreisförmige Hüllkontur des Phasenleiters bilden.

Begrenzen die Leiterbahnen eine kreisförmige Hüllkontur, so ist eine dielektrisch günstige äußere Gestalt geschaffen, so dass eine homogene Verteilung eines elektrischen Feldes an der Leiterbahn auftreten kann. In der Hüllkontur können Formabweichungen vorgesehen sein. Die unregelmäßigen Verformungen können beispielsweise durch Fügespalte zwischen Leiterbahnen bedingt sein. Der Phasenleiter sollte bevorzugt eine kreisförmige Hüllkontur aufweisen, wobei der Phasenleiter beispielsweise einen kreisförmigen bzw. kreisringförmigen Querschnitt aufweist. Eine Leiterbahn kann bevorzugt einen Querschnitt in Form eines Kreisausschnittes bzw. eines Kreisringausschnittes aufweisen, wobei die Leiterbahnen bevorzugt gleichartige Querschnitte aufweisen können.

Insbesondere bei einer Verwendung eines kreisringförmigen Querschnittes für einen Phasenleiter kann eine bevorzugte Stützung der Leiterbahnen gegeneinander vorgesehen sein, wobei im Innern des Phasenleiters ein Kanal ausgebildet sein kann, welcher von dem elektrisch isolierenden Fluid durchspült sein kann. Eine derartige Konstruktion weist weiter den Vorteil auf, dass die Ringstruktur des Phasenleiters auch bei größeren Längenänderungen des Phasenleiters erhalten bleibt, da Ausgleichbewegungen in den Kanal hinein erfolgen können. Die Kreisringausnehmung (Kanal) kann als Ausgleichvolumen genutzt werden, um Relativbewegungen zwischen den Leiterabschnitten aufzunehmen.

Eine vorteilhafte Ausgestaltung sieht vor, dass die Leiterbahnen einander über Stützflächen stützen, welche durch ein elektrisch isolierendes Mittel vor unmittelbarer Berührung voneinander geschützt sind.

Durch eine elektrische Isolation von insbesondere benachbart angeordneten Stützflächen gegeneinander, über welche die Leiterbahnen einander stabilisieren, ist ein Isolierabschnitt zwischen den Leiterbahnen gegeben, so dass ein unerwünschtes Übertreten von Stromanteilen zwischen den elektrisch parallel verlaufenden Leiterbahnen verhindert ist. Bei einer derartigen Verhinderung von elektrischen Querverbindungen zwischen den Leiterbahnen können die Leiterbahnen weiterhin relativ zueinander bewegbar sein. Ein elektrisch isolierendes Mittel separiert Stützflächen voneinander. Über das Stützmittel können Kräfte übertragen werden. Die Leiterbahnen können (z. B. unter Zwischenlage eines Isolierabschnittes) über die Stützflächen gestützt und stabilisiert werden. Als elektrisch isolierende Mittel können diskrete Bauteile wie elektrisch isolierende Formkörper, elektrisch isolierende Ummantelungen wie Bandagen usw. genutzt werden. Weiter können auch elektrisch isolierende Beschichtungen wie beispielsweise Lackierungen, Oxidschichten etc. verwendet werden. Ein elektrisch isolierendes Mittel kann bevorzugt in einem Fügespalt zwischen Stützflächen angeordnet sein. Zusätzlich können elektrisch isolierende Mittel (Isolierabschnitt) axiale Verschiebungen zwischen den Leiterbahnen unterstützen, so dass ein leichtgängiges Bewegen innerhalb des Phasenleiters bzw. der Leiterbahnen des Phasenleiters relativ zueinander ermöglicht ist. Durch geeignete Wahl des Materials für das elektrisch isolierende Mittel kann eine Justage der Reibkräfte zwischen den Leiterbahnen vorgenommen werden.

Vorteilhafterweise kann vorgesehen sein, dass die Leiterbahnen miteinander verseilt sind.

Ein Verseilen der Leiterbahnen miteinander führt zu einer erhöhten Stabilität des Phasenleiters, wobei weiterhin eine Stützung der Leiterbahnen gegeneinander gewährleistet ist. Dabei wird eine Längsstabilität der Leiterbahnen durch ein Verseilen erhöht. Axiale Bewegungen zwischen den Leiterbahnen können in dem Phasenleiter verbessert aufgenommen werden.

Eine weitere vorteilhafte Ausgestaltung kann vorsehen, dass eine Leiterbahn bildende Drähte innerhalb der Leiterbahn verseilt sind.

Durch ein Verseilen der Drähte einer Leiterbahn kann ein mehrfach verseilter Phasenleiter gebildet werden, welcher eine verbesserte Widerstandsfähigkeit gegenüber mechanischen Belastungen aufweist, wobei auszugleichende Längenänderungen in verbesserter Weise unter reduzierter Belastung der einzelnen Drähte der Leiterbahnen aufgenommen werden können.

Weiterhin kann vorteilhaft vorgesehen sein, dass die Drähte sowie die Leiterbahnen gleichsinnig verseilt sind.

Ein gleichsinniges Verseilen der Drähte sowie der Leiterbahnen ermöglicht es, in den Leiterbahnen bzw. zwischen den Leiterbahnen Zwickelräume durch eine gleichsinnige Verseilung zu vermeiden bzw. deren Ausdehnung zu reduzieren. Damit kann die Biegesteifigkeit des Phasenleiters zusätzlich verbessert werden. Weiterhin wird der zur Übertragung eines elektrischen Stromes nötige Bauraum reduziert.

Weiterhin kann vorteilhaft vorgesehen sein, dass der Phasenleiter am Kapselungsgehäuse abgestützt ist.

Das Kapselungsgehäuse umgibt das elektrisch isolierende Fluid und schließt dieses vorzugsweise hermetisch ein. Der Phasenleiter kann relativ zum Kapselungsgehäuse abgestützt sein. Es können dazu Isolationsanordnungen eingesetzt werden, welche eine mechanische Brücke zwischen Phasenleiter und Kapselungsgehäuse herstellen, wobei diese mechanische Brücke elektrisch isolierend wirkt. Die mechanische Brücke quert das elektrisch isolierende Fluid. Es kann auch vorgesehen sein, dass das Kapselungsgehäuse zumindest abschnittsweise elektrisch isolierend wirkt, wodurch eine unmittelbare Abstützung/Einbettung des Phasenleiters am Kapselungsgehäuse ermöglicht ist. Der elektrisch isolierende Abschnitt am Kapselungsgehäuse kann Teil einer fluiddichten Barriere des Kapselungsgehäuses sein. Ein Stützelement (Isolationsanordnung) kann beispielsweise die Fluidisolation queren. Als elektrisch isolierende Abschnitte des Kapselungsgehäuses können beispielsweise Scheibenisolatoren eingesetzt werden, welche von dem Phasenleiter gequert sein können. Ein Stützelement (Isolationsanordnung) kann beispielsweise an/in einer Innenwandung des Kapselungsgehäuses anliegen und relativ zur dieser den Phasenleiter positionieren.

Eine weitere vorteilhafte Ausgestaltung kann vorsehen, dass der Phasenleiter am Kapselungsgehäuse punktuell abgestützt ist.

Ein punktuelles Abstützen des Phasenleiters am Kapselungsgehäuse ermöglicht es, Relativbewegungen des Phasenleiters über die Länge des Phasenleiters hinweg verteilt zuzulassen. Zum Beispiel können Relativbewegungen zwischen den Leiterbahnen auf einer verlängerten Wegstrecke verteilt werden, so dass eine mechanische Belastung des Phasenleiters örtlich reduziert wird bzw. auf eine Vielzahl von Punkte verteilt wird. Es kann beispielsweise zu einem Ausbuckeln des Phasenleiters auf Grund von Wärmebeeinflussungen kommen.

Eine weiter vorteilhafte Ausgestaltung kann vorsehen, dass ein Armaturkörper den Phasenleiter einspannt.

Ein Armaturkörper kann den Phasenleiter zusätzlich stabilisieren, indem dieser beispielsweise auf den Phasenleiter Kräfte von außen aufbringt, so dass die Leiterbahnen gegeneinander gestützt sind. So kann ein Armaturkörper beispielsweise einen Phasenleiter entlang eines Umlaufes umgreifen und die Leiterbahnen gegenseitig verpressen, so dass diese einander abstützen. Vorteilhaft ist der Phasenleiter in einem Armaturkörper eingespannt, so dass ein winkelstarrer Verbund zwischen Armaturkörper und Phasenleiter gegeben ist. Über den Armaturkörper kann beispielsweise auch ein Abstützen des Phasenleiters am Kapselungsgehäuse vorgenommen werden. Die Armaturkörper können beispielsweise elektrisch leitend oder elektrisch isolierend ausgebildet sein, wobei diese mit einem elektrischen Isolator verbunden sein können oder selbst als elektrischer Isolator wirken können. Der Armaturkörper kann beispielsweise als Formteil ausgeführt sein. Es kann jedoch auch der Einsatz von flexibel verformbaren Armaturkörpern vorgesehen sein. So können beispielsweise Bandagen genutzt werden, um eine äußere Kraft auf den Phasenleiter aufprägen zu können.

Eine weitere vorteilhafte Ausgestaltung kann vorsehen, dass das elektrisch isolierende Fluid unter Überdruck steht.

Durch ein Komprimieren des Fluides wird dessen elektrische Isolationsfähigkeit im Regelfall positiv beeinflusst. Insbesondere bei gasförmigen Fluiden kann deren Isolationsfestigkeit durch eine Druckerhöhung erhöht werden. So kann die durch das Fluid zur Verfügung zu stellende Isolationsdistanz reduziert werden. Als Fluide eigenen sich insbesondere gasförmiges Schwefelhexafluorid, Stickstoff, Kohlendioxid usw. sowie Gemische mit diesen Gasen.

Weiterhin ist vorgesehen, dass das Kapselungsgehäuse ein Druckbehälter ist.

Durch die Ausgestaltung des Kapselungsgehäuses als Druckbehälter ist einerseits die Möglichkeit gegeben, ein Verflüchtigen bzw. Verunreinigen des Fluides zu verhindern. Andererseits kann das Kapselungsgehäuse den durch ein Vorliegen von Differenzdrücken zwischen dem Inneren des Kapselungsgehäuses sowie dem Äußeren des Kapselungsgehäuses auftretenden Kräften widerstehen. Zusätzliche Druckbehälter sind so nicht vonnöten. Das Kapselungsgehäuses kann so zum einen einer Aufnahme von Druckkräften und zum anderen einer Positionierung des Phasenleiters im Inneren des Kapselungsgehäuses dienen und das elektrisch isolierende Fluid vor Verunreinigungen bzw. einem Verflüchtigen schützen.

Ein Ausführungsbeispiel der Erfindung wird schematisch in einer Zeichnung gezeigt und nachfolgend näher beschrieben. Dabei zeigt die
- Figur 1: einen Querschnitt durch einen fluidisolierten Phasenleiter in einer ersten Ausführungsvariante, die
- Figur 2: einen Querschnitt durch einen fluidisolierten Phasenleiter in einer zweiten Ausführungsvariante sowie die
- Figur 3: eine perspektivische Ansicht der aus den Fig. 1 und 2 bekannten fluidisolierten Phasenleiter.

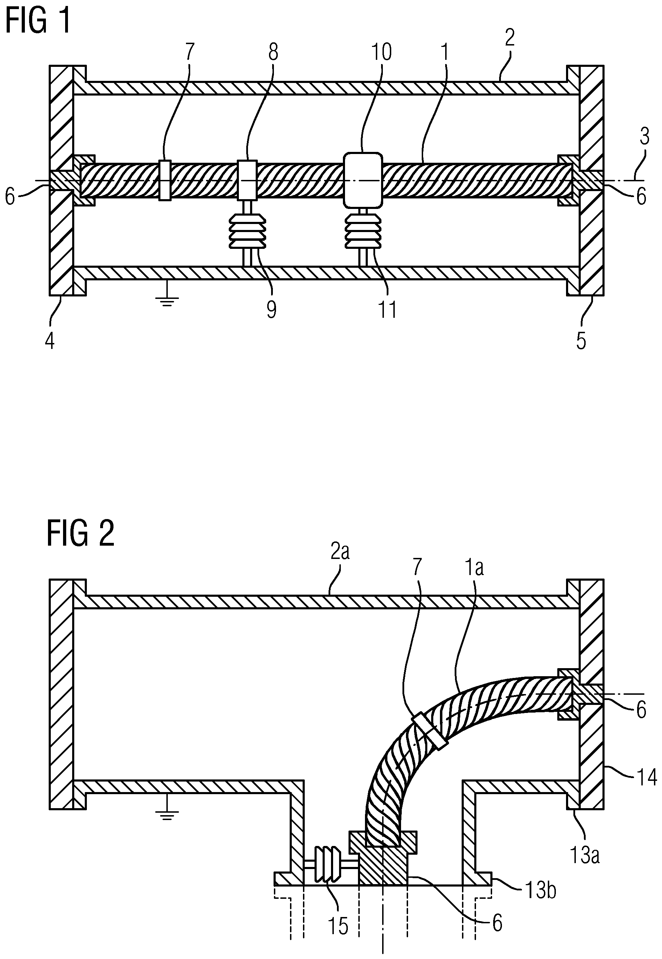

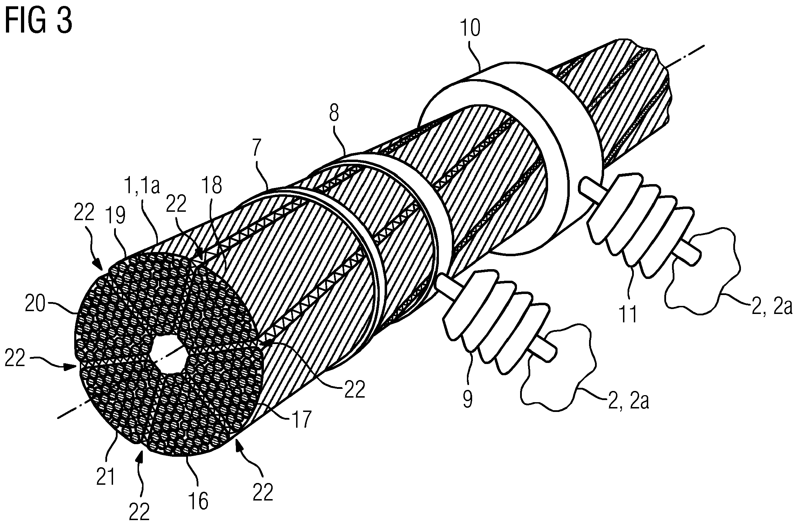

Die Figur 1 zeigt einen fluidisolierten Phasenleiter 1 in einer ersten Ausführungsvariante. Der Phasenleiter 1 nach Fig. 1 weist eine linear gestreckte Struktur auf, wobei der Phasenleiter 1 nach Fig. 1 einen im Wesentlichen kreisringförmigen Querschnitt aufweist (vgl. auch Fig. 3). Der Phasenleiter 1 nach Fig. 1 ist im Innern eines Kapselungsgehäuses 2 angeordnet. Das Kapselungsgehäuse 2 ist im Wesentlichen hohlzylindrisch ausgestaltet und weist eine Rotationsachse 3 auf. Der Phasenleiter 1 ist dabei im Wesentlichen koaxial zu der Rotationsachse 3 ausgerichtet. Endseitig weist das Kapselungsgehäuse 2 einen ersten Scheibenisolator 4 sowie einen zweiten Scheibenisolator 5 auf. Die Scheibenisolatoren 4, 5 sind Teil einer fluiddichten Barriere des Kapselungsgehäuses 2. Die beiden Scheibenisolatoren 4, 5 sind jeweils zentrisch von einem Armaturkörper 6 durchsetzt. Die Armaturkörper 6 sind fluiddicht in die jeweiligen Scheibenisolatoren 4, 5 eingesetzt, so dass die beiden Scheibenisolatoren 4, 5 mit den dort jeweils eingebetteten Armaturkörpern 6 eine fluiddichte Barriere an dem Kapselungsgehäuse 2 ausbilden. Das Innere des Kapselungsgehäuses 2 ist mit einem elektrisch isolierenden Fluid befüllt, welches Überdruck führt. Das Kapselungsgehäuse 2 ist beispielsweise abschnittsweise elektrisch leitend ausgefüllt und kann mit Erdpotential beaufschlagt sein.

In den einander zugewandten Seiten der Armaturkörper 6 sind jeweils buchsenförmige Ausnehmungen vorgesehen, in welche die voneinander abgewandten stirnseitigen Enden des Phasenleiters 1 hineinragen. Die in den buchsenförmigen Ausnehmungen der Armaturkörper 6 liegenden Enden des Phasenleiters 1 sind mit dem jeweiligen Armaturkörper 6 elektrisch kontaktiert. Dazu kann beispielsweise ein Verpressen, Verschweißen, Verlöten, Verschrauben, Verklemmen usw. des jeweiligen Armaturkörpers 6 sowie des jeweiligen Endes des Phasenleiters 1 vorgesehen sein.

Um einzelne Leiterbahnen 16, 17, 18, 19, 20, 21 gegeneinander zu stabilisieren (vgl. auch Fig. 3), ist ein erster Armaturkörper 7 vorgesehen. Der erste Armaturkörper 7 weist die Form eines den Phasenleiter 1 in Umlaufrichtung, insbesondere in sich geschlossen umgreifenden Ringes auf. Dieser Ring in Form eines ersten Armaturkörpers 7 verhindert ein Auseinandertreiben der einzelnen Leiterbahnen des Phasenleiters 1 und verspannt diese gegeneinander. Stützflächen der Leiterbahnen 16, 17, 18, 19, 20, 21 stützen einander. Der erste Armaturkörper 7 kann beispielsweise elektrisch leitend oder auch elektrisch isolierend ausgeführt sein.

Weiterhin ist ein zweiter Armaturkörper 8 vorgesehen, welcher elektrisch leitend und/oder dielektrisch isolierend wirkend ausgeführt sein kann. Auch der zweite Armaturkörper 8 umgibt und umgreift den Phasenleiter 1, wobei der zweite Armaturkörper 8 mit einem Stützisolator 9 verbunden ist. Der Stützisolator 9 stellt eine mechanische Verbindung zwischen dem Phasenleiter 1 sowie dem Kapselungsgehäuse 2 dar. Der Stützisolator 9 ist innenmantelseitig am Kapselungsgehäuse 1 abgestützt und bildet eine punktuelle Abstützung des Phasenleiters 1 aus. Der Stützisolator 9 quert das elektrisch isolierende Fluid.

Ein dritter Armaturkörper 10 spannt ebenfalls den Phasenleiter 1 gemäß Fig. 1 ein. Dabei ist der dritte Armaturkörper 10 aus elektrisch isolierendem Material gebildet, wobei der dritte Armaturkörper 10 mit einem Stützisolator 11 verbunden ist. Der Stützisolator 11 kann integraler Bestandteil des dritten Armaturkörpers 10 sein. Es kann jedoch auch vorgesehen sein, dass der Stützisolator 11 als diskretes Bauteil ausgeformt ist. Der erste, der zweite sowie der dritte Armaturkörper 7, 9, 10 stabilisieren jeweils den Phasenleiter 1. Ebenso sind die endseitig angeordneten Armaturkörper geeignet, den Phasenleiter 1 zu stabilisieren. Darüber hinaus dienen der zweite Armaturkörper 8, der dritte Armaturkörper 10 sowie die beiden Armaturkörper 6, welche in den ersten sowie dem zweiten Scheibenisolator 4, 5 eingesetzt sind, einer punktuelle Abstützung des Phasenleiters 1. Die Armaturkörper 7, 9, 10 verspannen die Leiterbahnen 16, 17, 18, 19, 20, 21 des Phasenleiters 1.

In der Figur 2 ist eine abweichende Verlegeform eines Phasenleiters 1a dargestellt. Der Phasenleiter 1a weist einen gekrümmten Verlauf auf, so dass er zwischen an einem Kapselungsgehäuse 2a angeordneten Flanschen 13a, 13b, welche im Wesentlichen rechtwinklig zueinander liegen, verläuft. Der eine Flansch 13a ist analog zur Ausgestaltung nach Fig. 1 mit einem Scheibenisolator 14 verschlossen. In dem Scheibenisolator 14 ist ein Armaturkörper 6, wie aus der Fig. 1 bekannt, eingesetzt. In diesem Armaturkörper 6 ist eine buchsenförmige Ausnehmung angeordnet, in welche der Phasenleiter 1a mit gekrümmtem Verlauf mit einem seiner stirnseitigen Enden eingesetzt ist. Mit seinem stirnseitigen anderen Ende mündet der gekrümmte Phasenleiter 1a in einen Armaturkörper 6, welcher jedoch nicht über einen Scheibenisolator, sondern über einen säulenförmigen Stützisolator 15 gehalten ist. Der säulenförmige Stützisolator 15 ist innenmantelseitig am Kapselungsgehäuse 2a abgestützt. Die beiden buchsenförmigen Ausnehmungen der Armaturkörper 6 gemäß der Fig. 2 sind im Wesentlichen rechtwinklig zueinander ausgerichtet, so dass der Phasenleiter 1a entlang einer im Wesentlichen um 90° gekrümmten Bahn verläuft.

Durch die Verwendung eines Armaturkörpers 6 an einem säulenförmigen Stützisolator 14 besteht die Möglichkeit, dass an dem Kapselungsgehäuse 2a gemäß Fig. 2 ein weiteres Gehäuse angeflanscht werden kann, welches einen fluiddichten Abschluss des Kapselungsgehäuses 2 nach Fig. 2 vornehmen kann.

Um den Phasenleiter 1a gemäß Fig. 2 zu stabilisieren, ist dort ein erster Armaturkörper 7 angeordnet, welcher eine Stabilisierung der einzelnen Leiterbahnen 16, 17, 18, 19, 20, 21 des Phasenleiters 1a nach Fig. 2 vornimmt. Darüber hinaus können auch weitere Armaturkörper wie aus der Figur 1 bekannt verwendet werden.

In den Figuren 1 und 2 sind jeweils beispielhaft einphasig gekapselte Anordnungen eines Phasenleiters 1, 1a gezeigt. Eine Nutzung der Erfindung kann auch in mehrphasig gekapselten Anordnungen erfolgen. D. h. innerhalb eines gemeinsamen Kapselungsgehäuses können mehrere Phasenleiter von demselben Isolierfluidvolumen umspült sein.

In der Figur 3 ist eine perspektivische Ansicht eines geschnittenen Phasenleiters 1, 1a, wie aus den Figuren 1 und 2 bekannt, dargestellt. Weiterhin ist exemplarisch in der perspektivischen Ansicht nach Fig. 3 die Position eines ersten Armaturkörpers 7, eines zweiten Armaturkörpers 8 sowie eines dritten Armaturkörpers 10, wie aus der Fig. 1 bekannt, dargestellt. Beispielhaft ist ein Kapselungsgehäuse 2; 2a ausschnittsweise dargestellt. Erkenntlich ist in der stirnseitigen Ansicht des Phasenleiters 1, 1a dessen kreisringförmiger Querschnitt, wobei der Querschnitt des Phasenleiters 1, 1a in mehrere Zonen unterteilt ist. Die Zonen bilden jeweils eine Stirnseite einer Leiterbahn 16, 17, 18, 19, 20, 21 ab. Die Leiterbahnen 16, 17, 18, 19, 20, 21 stützen einander über Stützflächen gegenseitig in einem Umlauf. Jede der Leiterbahnen 16, 17, 18, 19, 20, 21 ist mehrdrähtig aufgebaut, wobei jede der Leiterbahnen 16, 17, 18, 19, 20, 21 in sich verseilte Drähte aufweist. Weiterhin sind die Leiterbahnen 16, 17, 18, 19, 20, 21 in sich verseilt, wobei die Verseilrichtung der Drähte der einzelnen Leiterbahnen 16, 17, 18, 19, 20, 21 der Verseilrichtung der Leiterbahnen 16, 17, 18, 19, 20, 21 entspricht.

Die Stützflächen sind Mantelflächen der jeweiligen prismatischen Leiterbahnen 16, 17, 18, 19, 20, 21. Auf Grund der Verseilung der Leiterbahnen 16, 17, 18, 19, 20, 21 folgen die Prismenlängsachsen (Zylinderachsen) der Leiterbahnen 16, 17, 18, 19, 20, 21 einem wendelförmigen Verlauf. Stützflächen benachbarter Leiterbahnen 16, 17, 18, 19, 20, 21 sind einander zugewandt und liegen mittelbar unter Zwischenlage eines elektrisch isolierenden Mittels 22 an. Das elektrisch isolierende Mittel 22 ist beispielsweise eine elektrisch isolierende Folie, welche ein unmittelbares Berühren der Stützflächen verhindert. Mantelflächen der Leiterbahnen 16, 17, 18, 19, 20, 21, welche radial außenliegend positioniert sind, begrenzen die Hüllkontur des Phasenleiters 1, 1a. Bis auf Unterbrechungen im Fügebereich der Leiterbahnen 16, 17, 18, 19, 20, 21 sowie Einkerbungen zwischen Drähten oder jeweiligen Leiterbahnen 16, 17, 18, 19, 20, 21 weist der Phasenleiter 1, 1a eine kreisrunde Hüllkontur auf. Zentrisch im Phasenleiter ist ein Kanal angeordnet, welcher von dem elektrisch leitenden Fluid durchspült ist. Alternativ kann dort auch eine weitere Leiterbahn formkomplementär eingepasst angeordnet sein. Es kann auch vorgesehen sein, dass der Kanal mit einem elektrisch isolierenden Mittel befüllt ist. Das elektrisch isolierende Mittel kann sich rippenartig in die Fügespalte zwischen den Leiterbahnen 16, 17, 18, 19, 20, 21 ausdehnen und sich schraubenartig in axialer Richtung fortsetzen. Zwischen den insbesondere benachbarten Stützflächen, mit welchen die einzelnen Leiterbahnen 16, 17, 18, 19, 20, 21 einander stützen, ist jeweils ein elektrisch isolierendes Mittel 22 angeordnet. Als elektrisch isolierendes Mittel kann beispielsweise ein Feststoffisolator oder ein anderes geeignetes elektrisch isolierendes Medium genutzt sein, welches Kräfte zwischen den einzelnen Leiterbahnen 16, 17, 18, 19, 20, 21 vermitteln kann und dabei seine elektrischen Isolationseigenschaften beibehält.

## Patentansprüche

1. Anordnung aufweisend einen fluidisolierten Phasenleiter (1, 1a), welcher von einem elektrisch isolierenden Fluid umspült angeordnet ist, wobei der Phasenleiter (1, 1a) zumindest abschnittsweise in mehrere Leiterbahnen (16, 17, 18, 19, 20, 21) unterteilt ist,
**dadurch gekennzeichnet, dass**
die Leiterbahnen (16, 17, 18, 19, 20, 21) einander über Stützflächen stützen, welche durch ein elektrisch isolierendes Mittel (22) vor unmittelbarer Berührung voneinander geschützt sind, und
der Phasenleiter (1, 1a) innerhalb eines Kapselungsgehäuses (2, 2a) angeordnet ist, wobei das Kapselungsgehäuse (2, 2a) ein Druckbehälter ist.

2. Anordnung aufweisend einen fluidisolierten Phasenleiter (1, 1a) nach Anspruch 1,
**dadurch gekennzeichnet, dass**
die Leiterbahnen auf einem in sich geschlossenen Umlauf einander stützen.

3. Anordnung aufweisend einen fluidisolierten Phasenleiter (1, 1a) nach Anspruch 1 oder 2,
**dadurch gekennzeichnet, dass**
zumindest eine der Leiterbahnen (16, 17, 18, 19, 20, 21) mehrdrähtig ausgeführt ist.

4. Anordnung aufweisend einen fluidisolierten Phasenleiter (1, 1a) nach einem der Ansprüche 1 bis 3,
**dadurch gekennzeichnet, dass**
die Leiterbahnen (16, 17, 18, 19, 20, 21) jeweils ein Segment des Phasenleiters (1, 1a) bilden.

5. Anordnung aufweisend einen fluidisolierten Phasenleiter (1, 1a) nach einem der Ansprüche 1 bis 4,
**dadurch gekennzeichnet, dass**
die Leiterbahnen (16, 17, 18, 19, 20, 21) eine im Wesentlichen kreisförmige Hüllkontur des Phasenleiters (1, 1a) bilden.

6. Anordnung aufweisend einen fluidisolierten Phasenleiter (1, 1a) nach einem der Ansprüche 1 bis 5,
**dadurch gekennzeichnet, dass**
die Leiterbahnen (16, 17, 18, 19, 20, 21) miteinander verseilt sind.

7. Anordnung aufweisend einen fluidisolierten Phasenleiter (1, 1a) nach einem der Ansprüche 1 bis 6,
**dadurch gekennzeichnet, dass**
eine Leiterbahn (16, 17, 18, 19, 20, 21) bildende Drähte innerhalb der Leiterbahn verseilt sind.

8. Anordnung aufweisend einen fluidisolierten Phasenleiter (1, 1a) nach Anspruch 7,
**dadurch gekennzeichnet, dass**
die Drähte sowie die Leiterbahnen (16, 17, 18, 19, 20, 21) gleichsinnig verseilt sind.

9. Anordnung aufweisend einen fluidisolierten Phasenleiter (1, 1a) nach einem der Ansprüche 1 bis 8,
**dadurch gekennzeichnet, dass**
der Phasenleiter (1, 1a) am Kapselungsgehäuse (2, 2a) abgestützt ist.

10. Anordnung aufweisend einen fluidisolierten Phasenleiter (1, 1a) nach einem der Ansprüche 1 bis 9,
d**adurch gekennzeichnet**, dass
der Phasenleiter (1, 1a) am Kapselungsgehäuse (2, 2a) punktuell abgestützt ist.

11. Anordnung aufweisend einen fluidisolierten Phasenleiter (1, 1a) nach einem der Ansprüche 1 bis 10,
**dadurch gekennzeichnet, dass**
ein Armaturkörper (6, 7, 8, 10) den Phasenleiter (1, 1a) einspannt.

12. Anordnung aufweisend einen fluidisolierten Phasenleiter (1, 1a) nach einem der Ansprüche 1 bis 11,
**dadurch gekennzeichnet, dass**
das elektrisch isolierende Fluid unter Überdruck steht.

## Claims

1. Arrangement comprising a fluid-insulated phase conductor (1, 1a), which is arranged in such a way that an electrically insulating fluid flows around it, wherein the phase conductor (1, 1a) is divided at least in certain sections into a plurality of conductor tracks (16, 17, 18, 19, 20, 21),
**characterized in that**
the conductor tracks (16, 17, 18, 19, 20, 21) support one another via supporting faces which are protected against direct contact with one another by an electrically insulating medium (22), and
the phase conductor (1, 1a) is arranged within an encapsulation housing (2, 2a), wherein the encapsulation housing (2, 2a) is a pressure vessel.

2. Arrangement having a fluid-insulated phase conductor (1, 1a) according to Claim 1,
**characterized in that**
the conductor tracks support one another in an enclosed circuit.

3. Arrangement having a fluid-insulated phase conductor (1, 1a) according to Claim 1 or 2,
**characterized in that**
at least one of the conductor tracks (16, 17, 18, 19, 20, 21) is embodied with multiple wires.

4. Arrangement having a fluid-insulated phase conductor (1, 1a) according to one of claims 1 to 3,
**characterized in that**
the conductor tracks (16, 17, 18, 19, 20, 21) each form a segment of the phase conductor (1, 1a).

5. Arrangement having a fluid-insulated phase conductor (1, 1a) according to one of Claims 1 to 4,
**characterized in that**
the conductor tracks (16, 17, 18, 19, 20, 21) form an essentially circular envelope contour of the phase conductor (1, 1a).

6. Arrangement having a fluid-insulated phase conductor (1, 1a) according to one of Claims 1 to 5,
**characterized in that**
the conductor tracks (16, 17, 18, 19, 20, 21) are braided with one another.

7. Arrangement having a fluid-insulated phase conductor (1, 1a) according to one of Claims 1 to 6,
**characterized in that**
wires forming a conductor track (16, 17, 18, 19, 20, 21) are braided with one another within the conductor track.

8. Arrangement having a fluid-insulated phase conductor (1, 1a) according to Claim 7,
**characterized in that**
the wires and the conductor tracks (16, 17, 18, 19, 20, 21) are braided in the same direction.

9. Arrangement having a fluid-insulated phase conductor (1, 1a) according to one of Claims 1 to 8,
**characterized in that**
the phase conductor (1, 1a) is supported on the encapsulation housing (2, 2a).

10. Arrangement having a fluid-insulated phase conductor (1, 1a) according to one of Claims 1 to 9,
**characterized in that**
the phase conductor (1, 1a) is supported on the encapsulation housing (2, 2a) in a punctiform fashion.

11. Arrangement having a fluid-insulated phase conductor (1, 1a) according to one of Claims 1 to 10,
**characterized in that**
a fitting body (6, 7, 8, 10) clamps in the phase conductor (1, 1a).

12. Arrangement having a fluid-insulated phase conductor (1, 1a) according to one of Claims 1 to 11,
**characterized in that**
the electrically insulating fluid is under excess pressure.

## Revendications

1. Agencement comportant un conducteur (1, 1a) de phase à isolation par du fluide, qui est disposé en étant baigné par du fluide isolant du point de vue électrique, le conducteur (1, 1a) de phase étant subdivisé, au moins par endroit, en plusieurs pistes (16, 17, 18, 19, 20, 21) conductrices,
**caractérisé en ce que**
les pistes (16, 17, 18, 19, 20, 21) conductrices s'appuient les unes sur les autres par des surfaces d'appui, qui sont protégées les unes des autres d'un contact direct par un moyen (22) isolant du point de vue électrique, et
le conducteur (1, 1a) de phase est disposé à l'intérieur d'un boîtier (2, 2a) de blindage, le boîtier (2, 2a) de blindage étant un récipient tenant la pression.

2. Agencement comportant un conducteur (1, 1a) de phase à isolation par du fluide suivant la revendication 1,
**caractérisé en ce que**
les pistes conductrices s'appuient les unes sur les autres suivant un pourtour fermé.

3. Agencement comportant un conducteur (1, 1a) de phase à isolation par du fluide suivant la revendication 1 ou 2,
**caractérisé en ce que**
au moins l'une des pistes (16, 17, 18, 19, 20, 21) conductrices est réalisée à plusieurs fils.

4. Agencement comportant un conducteur (1, 1a) de phase à isolation par du fluide suivant l'une des revendications 1 à 3,
**caractérisé en ce que**
les pistes (16, 17, 18, 19, 20, 21) conductrices forment chacune un segment du conducteur (1, 1a) de phase.

5. Agencement comportant un conducteur (1, 1a) de phase à isolation par du fluide suivant l'une des revendication 1 à 4,
**caractérisé en ce que**
les pistes (16, 17, 18, 19, 20, 21) conductrices forment un contour d'enveloppe sensiblement circulaire du conducteur (1, 1a) de phase.

6. Agencement comportant un conducteur (1, 1a) de phase à isolation par du fluide suivant l'une des revendications 1 à 5,
**caractérisé en ce que**
les pistes (16, 17, 18, 19, 20, 21) conductrices sont torsadées entre elles.

7. Agencement comportant un conducteur (1, 1a) de phase à isolation par du fluide suivant l'une des revendications 1 à 6,
**caractérisé en ce que**
des fils formant une piste (16, 17, 18, 19, 20, 21) conductrice sont torsadés au sein de la piste conductrice.

8. Agencement comportant un conducteur (1, 1a) de phase à isolation par du fluide suivant la revendication 7,
**caractérisé en ce que**
les fils ainsi que les pistes (16, 17, 18, 19, 20, 21) conductrices sont torsadés dans le même sens.

9. Agencement comportant un conducteur (1, 1a) de phase à isolation par du fluide suivant l'une des revendications 1 à 8,
**caractérisé en ce que**
le conducteur (1, 1a) de phase est appuyé sur le boîtier (2, 2a) de blindage.

10. Agencement comportant un conducteur (1, 1a) de phase à isolation par du fluide suivant l'une des revendications 1 à 9,
**caractérisé en ce que**
le conducteur (1, 1a) de phase est appuyé ponctuellement sur le boîtier (2, 2a) de blindage.

11. Agencement comportant un conducteur (1, 1a) de phase à isolation par du fluide suivant l'une des revendications 1 à 10,
**caractérisé en ce qu'**
une pièce (6, 7, 8, 10) d'armature serre le conducteur (1, 1a) de phase

12. Agencement comportant un conducteur (1, 1a) de phase à isolation par du fluide suivant l'une des revendications 1 à 11,
**caractérisé en ce que**
le fluide isolant du point de vue électrique est en surpression.
